(19) Europäisches Patentamt / European Patent Office / Office européen des brevets

(11) **EP 4 063 420 A1**

(12) **EUROPEAN PATENT APPLICATION**

(43) Date of publication:
**28.09.2022 Bulletin 2022/39**

(21) Application number: **22160959.7**

(22) Date of filing: **09.03.2022**

(51) International Patent Classification (IPC):
*C08G 18/09* (2006.01)      *C08G 18/18* (2006.01)
*C08G 18/20* (2006.01)      *C08G 18/28* (2006.01)
*C08G 18/32* (2006.01)      *C08G 18/48* (2006.01)
*C08G 18/63* (2006.01)      *C08G 18/66* (2006.01)
*C08G 18/76* (2006.01)      *C08J 9/12* (2006.01)
*C08L 75/04* (2006.01)

(52) Cooperative Patent Classification (CPC):
**C08L 75/04; C08G 18/092; C08G 18/1825;
C08G 18/1875; C08G 18/2018; C08G 18/2875;
C08G 18/3206; C08G 18/4829; C08G 18/632;
C08G 18/667; C08G 18/7664; C08J 9/122;**
C08G 2110/00; C08G 2190/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2021 US 202163165286 P**

(71) Applicant: **Evonik Operations GmbH
45128 Essen (DE)**

(72) Inventors:
• **Hsu, Irene Joann
  Bryn Mawr, PA, 19010 (US)**
• **Yacoub, Khalil
  ALLENTOWN, PA, 18109 (US)**

(74) Representative: **Evonik Patent Association
c/o Evonik Industries AG
IP Management
Bau 1042A/PB 15
Paul-Baumann-Straße 1
45772 Marl (DE)**

(54) **PROCESSES, POLYURETHANE COMPOSITIONS AND POLYURETHANE PRODUCTS HAVING AMINE-BASED THERMOLATENT CATALYST**

(57)     A process for preparing a polyurethane product, and polyurethane compositions and products of the process. The process includes preparing a catalyst composition comprising at least one tertiary amine salt, wherein the at least one tertiary amine salt is a contact product of at least one carboxylic acid and at least one tertiary amine, wherein the at least one tertiary amine is selected from the group consisting of N-hydroxyethylpiperidine and tris(dimethylaminomethyl)phenol; and reacting at least one isocyanate, at least one polyol and the catalyst composition to form a polyurethane product.

EP 4 063 420 A1

**Description**

FIELD OF THE INVENTION

The field of invention is a process for preparing a polyurethane product requiring a very long latent state at around room temperature but snap cure at elevated temperatures, and polyurethane compositions and products of the process.

BACKGROUND OF THE INVENTION

Polyurethane products, such as a mechanically frothed polyurethane foam or a polyurethane elastomer, are used in the production of carpet backing, gaskets and insoles. Certain mechanically frothed polyurethane foams and polyurethane elastomers require a particular reactivity profile compared to other polyurethane applications due to their unique processing requirements. The pot life or puddle time needs to be very long, over ten minutes at room temperature, compared to other polyurethane applications where the pot life is a few minutes. The foam or elastomer also needs to cure quickly when it is exposed to heat. Thus, a very thermolatent catalyst is needed.

The most common catalyst to use in mechanically frothed polyurethane foam or polyurethane elastomer applications is nickel acetylacetonate or Ni(acac). However, Ni(acac) has an undesirable environment, health and safety (EHS) profile and has been identified as a carcinogen. Thus, it is desirable to replace Ni in these foam applications. Other metal complexes such as tin, iron and copper can work, but there is no viable amine-based catalyst to date. Thus, there is a need for an amine-based catalyst that can demonstrate a profile that can be comparable to that of Ni(acac) at varying temperatures.

US 6,140,381 relates to a process for producing a polyurethane foam using delay action alkyl substituted organotin catalyst compositions.

US 8,062,709 relates to a process for producing a polyurethane foam using metal acetylacetonate and sulfur-containing organotin catalysts. Examples of metal acetylacetonate used in the disclosure include nickel acetylacetonate.

US 20170225158A1 relates to a process for producing a polyurethane foam using a copper based catalyst.

BRIEF SUMMARY OF THE INVENTION

The present invention provides a process for preparing a polyurethane product, and polyurethane compositions and products of the process. The process comprises preparing a catalyst composition comprising at least one tertiary amine salt, wherein the at least one tertiary amine salt is a contact product of at least one carboxylic acid and at least one tertiary amine, wherein the at least one tertiary amine is selected from the group consisting of N-hydroxyethylpiperidine and tris(dimethylaminomethyl)phenol; and reacting at least one isocyanate, at least one polyol and the catalyst composition to form a polyurethane product.

In an exemplary embodiment, the process further comprises forming a layer of the polyurethane product on a substrate; and heating the polyurethane product to a temperature from 100 to 180°C to cure the polyurethane product and form a polyurethane layer bonded to the substrate

In an exemplary embodiment, the process includes a N-hydroxyethylpiperidine salt of carboxylic acid.

In another exemplary embodiment, the process includes a tris(dimethylaminomethyl) phenol salt of carboxylic acid.

In another exemplary embodiment, the process further includes the catalyst composition further comprising a dimethylimidazole salt of carboxylic acid or a dimethylcyclohexamine salt of carboxylic acid.

In a further exemplary embodiment, the process further includes the catalyst composition further comprising a trimer catalyst.

In a further exemplary embodiment, the process further includes reacting the at least one isocyanate, at least one polyol and the catalyst composition in the presence of a blowing agent.

In an exemplary embodiment, the polyurethane product is a polyurethane elastomer.

In another exemplary embodiment, the polyurethane product is a polyurethane foam.

Other features and advantages of the present invention will be apparent from the following more detailed description of the preferred embodiments.

DETAILED DESCRIPTION OF THE INVENTION

The present invention provides a process comprising the steps of a) preparing a catalyst composition comprising at least one tertiary amine salt, wherein the at least one tertiary amine salt is a contact product of at least one carboxylic acid and at least one tertiary amine, wherein the at least one tertiary amine is selected from the group consisting of N-hydroxyethylpiperidine and tris(dimethylaminomethyl)phenol; and b) reacting at least one isocyanate, at least one polyol and the catalyst composition to form a polyurethane product.

In a preferred embodiment, process further comprises c) forming a layer of the polyurethane product on a substrate; and d) heating the polyurethane product to a temperature from 100 to 180°C to cure the polyurethane product and form a polyurethane layer bonded to the substrate.

Tertiary amine salts of the invention can be formed by contacting at least one tertiary amine with at least one carboxylic acid. Representative tertiary amines of the invention comprise N-hydroxyethylpiperidine (NHEP) and tris(dimethylaminomethyl)phenol (TDMAMP).

Representative carboxylic acids that can be used to form the tertiary amine salts comprise C8, C9 and C10 carboxylic acids including, but not limited to, 2-ethylhexanoic acid (2-EHA), octanoic acid (OA), nonanoic acid, neononanoic acid, decanoic acid, neodecanoic acid; polymeric acids including, but not limited to, tall oil fatty acid (TOFA); and aromatic carboxylic acids including, but not limited to, DABCO® BA100.

In a preferred embodiment, the at least one carboxylic acid is selected from the group consisting of 2-ethylhexanoic acid, octanoic acid, neodecanoic acid and tall oil fatty acid.

In another preferred embodiment, the at least one carboxylic acid is an aromatic carboxylic acid. In a further preferred embodiment, the aromatic carboxylic acid has a structure of $\{(R^2)_x(R^3)_y(Ar)[(CH_2)_n(CO_2H)]_z\}$ -wherein $R^2 = H$; $R^3 = C_{1-4}$ alkyl, OH, $-CO_2-R^4$ or $-CONHR^4$ or $-CO_2M$ wherein $R^4 = C_{1-4}$ alkyl, $-(C_2H_4O)_m$-H wherein m = 1 to 10 and M = Li, Na, K; Ar= substituted $C_6$ (Phenyl) or $C_{10}$ (Naphtalenic) ring; n = 0 to 6; x = 0-5 and y = 0-5 and z = 1-3 for a C6 aromatic ring or x = 0-9 and y= 0-9 and z = 1-3 for a C10 aromatic naphthalenic ring.

In a further preferred embodiment, the at least one carboxylic acid is the aromatic carboxylic acid DABCO® BA100.

TRIMER CATALYSTS

In one aspect of the present invention, the catalyst composition comprises at least one trimer catalyst. The at least one trimer catalyst is particularly useful for improving back-end cure. Thus, in one preferred embodiment the trimer catalyst is used in combination with the at least one tertiary amine salt where the at least one tertiary amine salt is selected from the group consisting of a N-hydroxyethylpiperidine salt of carboxylic acid and a tris(dimethylaminomethyl)phenol salt of carboxylic acid. In another preferred embodiment, the trimer catalyst is used in combination with a) the at least one tertiary amine salt where the at least one tertiary amine salt is selected from the group consisting of a N-hydroxyethylpiperidine salt of carboxylic acid and a tris(dimethylaminomethyl)phenol salt of carboxylic acid and b) an additional amine salt selected from the group consisting of a dimethylimidazole salt of carboxylic acid or a dimethylcyclohexamine salt of carboxylic acid.

In a preferred embodiment, the at least one trimer catalyst is selected from the group consisting of ammonium pivalate and potassium acetate.

Use levels of the trimer catalysts have to be maintained very low (<0.5% by wt of the formulation). When used at 1% by wt of the formulation, the conventional trimer catalysts cure in less than 30 seconds at room temperature. However, when use levels are dropped to 0.5% by wt or lower the mixture is processable.

POLYISOCYANATES

Polyisocyanates that are useful in the polyurethane product formation process preferably include, but are not limited to, hexamethylene diisocyanate (HDI), isophorone diisocyanate, phenylene diisocyante (PDI), toluene diisocyanate (TDI), diphenyl methane diisocyanate isomers (MDI), hydrated MDI and 1,5-naphthalene diisocyanate. For example, 2,4-TDI, 2,6-TDI, and mixtures thereof, can be readily employed in the present invention. Preferred examples of polyisocyanates include toluene diisocyanate and diphenyl methane diisocyanate and their isomers. In another aspect of this invention, prepolymers of polyisocyanates comprising a partially pre-reacted mixture of polyisocyanates and polyether or polyester polyol are suitable. In still another aspect, the polyisocyanate comprises MDI, or consists essentially of MDI or mixtures of MDI's.

The products, compositions, and process of producing polyurethane products of the present invention can be used to manufacture many types of polyurethane products, such as mechanically frothed polyurethane foam or polyurethane elastomer. In the process of the present invention, the isocyanate component is combined with the catalyst composition at or about a stoichiometric ratio. In one embodiment, the stoichiometric ratio is based upon an isocyanate index. The isocyanate index is the actual amount of polyisocyanate used divided by the theoretically required stoichiometric amount of polyisocyanate required to react with all the active hydrogen in the reaction mixture, multiplied by 100. For purposes of the present invention, isocyanate index is represented by the equation: Isocyanate Index = (Eq NCO/Eq of active hydrogen) x 100, wherein Eq NCO is the number of NCO functional groups in the polyisocyanate, and Eq of active hydrogen is the number of equivalent active hydrogen atoms.

Polyurethane products which are produced with an Isocyanate Index from about 80 to about 120 are within the scope of this invention.

POLYOLS

Active hydrogen-containing compounds for use with the foregoing polyisocyanates in forming the polyurethane products of this invention can be any of those organic compounds having at least two hydroxyl groups such as, for example, polyols. The polyol component of the reaction mixture includes at least a main or "base" polyol. Base polyols that are typically used in polyurethane product formation processes preferably include polyalkylene ether and polyester polyols. The polyalkylene ether polyol includes the poly(alkyleneoxide) polymers such as poly(ethyleneoxide) and poly(propyleneoxide) polymers and copolymers with terminal hydroxyl groups derived from polyhydric compounds, including diols and triols, These preferably include, but are not limited to, ethylene glycol, propylene glycol, 1,3-butane diol, 1,4-butane diol, 1,6-hexane diol, neopentyl glycol, diethylene glycol, dipropylene glycol, pentaerythritol, glycerol, diglycerol, trimethylol propane, cyclohexane diol, and sugars such as sucrose and like low molecular weight polyols.

Amine polyether polyols can be used in the present invention. These can be prepared when an amine such as, for example, ethylenediamine, diethylenetriamine, tolylenediamine, diphenylmethanediamine, or triethanolamine is reacted with ethylene oxide or propylene oxide. In another aspect of the present invention, a single high molecular weight polyether polyol, or a mixture of high molecular weight polyether polyols, such as mixtures of different multifunctional materials and/or different molecular weight or different chemical composition materials can be used.

In yet another aspect of the present invention, polyester polyols can be used, including those produced when a dicarboxylic acid is reacted with an excess of a diol. Non-limiting examples include adipic acid or phthalic acid or phthalic anhydride reacting with ethylene glycol or butanediol. Polyols useful in the present invention can be produced by reacting a lactone with an excess of a diol, for example, caprolactone reacted with propylene glycol. In a further aspect, active hydrogen-containing compounds such as polyester polyols and polyether polyols, and combinations thereof, are useful in the present invention.

In addition to the base polyols described above, or instead of them, materials commonly referred to as "copolymer polyols" may be included in a polyol component for use according to the invention. Copolymer polyols may be used in polyurethane foams to increase the resistance to deformation, for example to improve the load-bearing properties. Depending upon the load-bearing requirements, copolymer polyols may comprise from about 0 to about 80 percent by weight of the total polyol content.

Examples of copolymer polyols include, but are not limited to, graft polyols and polyurea modified polyols, both of which are known in the art and are commercially available.

Graft polyols are prepared by copolymerizing vinyl monomers, typically styrene and acrylonitrile, in a starting polyol. The starting polyol is typically a glycerol-initiated triol, and is typically end-capped with ethylene oxide (approximately 80-85% primary hydroxyl groups). Some of the copolymer grafts to some of the starting polyol. The graft polyol also contains homopolymers of styrene and acrylonitrile and unaltered starting polyol. The styrene/acrylonitrile solids content of the graft polyol typically ranges from 5 wt% to 45 wt%, but any kind of graft polyol known in the art may be used.

Polyurea modified polyols are formed by the reaction of a diamine and a diisocyanate in the presence of a starting polyol, with the product containing polyurea dispersion. A variant of polyurea modified polyols, also suitable for use, are polyisocyanate poly addition (PIPA) polyols, which are formed by the *in situ* reaction of an isocyanate and an alkanolamine in a polyol.

The polyol can have an OH number of about 5 to about 600, about 100 to about 600 and in some cases about 50 to about 100 and a functionality of about 2 to about 8, about 3 to about 6 and in some cases about 4 to about 6.

The amount of polyol can range from about 0 pphp to about 100 pphp about 10 pphp to about 90 pphp and in some cases about 20 pphp to about 80 pphp.

BLOWING AGENT

In accordance with the polyurethane foam product, and process of producing a polyurethane foam product within the scope of the present invention, suitable blowing agents preferably include, but are not limited to, air.

In a preferred embodiment, the process further includes reacting the at least one isocyanate, at least one polyol and the catalyst composition in the presence of a blowing agent.

In a further preferred embodiment, the blowing agent comprises air.

MISCELLANEOUS ADDITIVES

Depending upon the requirements during polyurethane product manufacturing or for the end-use application of the polyurethane product, various additives can be employed in the polyurethane product formulation to tailor specific properties. These preferably include, but are not limited to, cell stabilizers, flame retardants, chain extenders, epoxy resins, acrylic resins, fillers, pigments, or any combination thereof. It is understood that other mixtures or materials that are known in the art can be included in the product formulations and are within the scope of the present invention.

Cell stabilizers include surfactants such as organopolysiloxanes. Silicon surfactants can be present in the product formulation in amounts from about 0.5 to about 10 pphp, about 0.6 to about 9 pphp, about 0.7 to about 8 pphp, about 0.8 to about 7 pphp, about 0.9 to about 6 pphp, about 1 to about 5 pphp, or about 1.1 to about 4 pphp. Useful flame retardants include halogenated organophosphorous compounds and non-halogenated compounds. A non-limiting example of a halogenated flame retardant is trichloropropylphosphate (TCPP). For example, triethylphosphate ester (TEP) and dimethyl-methyl-phosphonate (DMMP) are non-halogenated flame retardants. Depending on the end-use product application, flame retardants can be present in the product formulation in amounts from 0 to about 50 pphp, from 0 to about 40 pphp, from 0 to about 30 pphp, or from 0 to about 20 pphp. In another aspect, the flame retardant is present from 0 to about 15 pphp, 0 to about 10 pphp, 0 to about 7 pphp, or 0 to about 5 pphp. Chain extenders such as ethylene glycol and butane diol can also be employed in the present invention. Ethylene glycol, for instance, can also be present in the formulation as a diluent or solvent for the carboxylate salt catalysts of the present invention.

The following is a list of preferred items of the invention:

Item 1. A process comprising the steps of a) preparing a catalyst composition comprising at least one tertiary amine salt, wherein the at least one tertiary amine salt is a contact product of at least one carboxylic acid and at least one tertiary amine, wherein the at least one tertiary amine is selected from the group consisting of N-hydroxyethylpiperidine and tris(dimethylaminomethyl)phenol; and b) reacting at least one isocyanate, at least one polyol and the catalyst composition to form a polyurethane product.

Item 2. The process of item 1 further comprising c) forming a layer of the polyurethane product on a substrate; and d) heating the polyurethane product to a temperature from 100 to 180°C to cure the polyurethane product and form a polyurethane layer bonded to the substrate.

Item 3. The process of item 1 or 2 wherein the at least one carboxylic acid is selected from the group consisting of 2-ethylhexanoic acid, octanoic acid, neodecanoic acid, and tall oil fatty acid.

Item 4. The process of item 1 or 2 wherein the at least one carboxylic acid is an aromatic carboxylic acid.

Item 5. The process of any of items 1-4 wherein the catalyst composition further comprises a dimethylimidazole salt of carboxylic acid or a dimethylcyclohexamine salt of carboxylic acid.

Item 6. The process of any of items 1-5 wherein the catalyst composition further comprises at least one trimer catalyst.

Item 7. The process of item 6 wherein the at least one trimer catalyst is selected from the group consisting of ammonium pivalate and potassium acetate.

Item 8. The process of any of items 1-7 wherein step b) further includes reacting the at least one isocyanate, at least one polyol and the catalyst composition in the presence of a blowing agent.

Item 9. The process of item 8 wherein the blowing agent comprises air.

Item 10. The process of any of items 1-7 wherein the polyurethane product is a polyurethane elastomer.

Item 11. The process of any of items 1-9 wherein the polyurethane product is a mechanically frothed polyurethane foam.

Examples

These examples are provided to demonstrate certain aspects of the invention and shall not limit the scope of the claims appended hereto.

Example 1

Compositions may be made according to methods known in the art using typical polyurethane formulations to which have been added an acid-blocked tertiary amine catalyst. The amount of polyisocyanate used in polyurethane formulations according to the invention is not limited, but it will typically be within those ranges known to those of skill in the art. An exemplary range is given in the table, indicated by reference to "NCO Index" (isocyanate index). As is known in the art, the NCO Index is defined as the number of equivalents of isocyanate, divided by the total number of equivalents of active hydrogen, multiplied by 100. The NCO index is represented by the following formula.

$$NCO\ Index = [NCO/(OH+NH)]\times100$$

Table 1

| Formulation A | |
|---|---|
| Component | Usage in parts per hundred parts polyol |
| Polyether polyol<br>Fn=3, OH#=48 mgKOH/g | 70 |
| SAN-based polymer polyol<br>Fn=3, OH#=30 mgKOH/g | 30 |
| Dipropylene glycol, chain extender | 15 |
| Polymeric silicone surfactant | 2 |
| Catalyst | 2 |
| Polymeric MDI, 31.2% NCO, Index 105 | 42.5 |

Table 1 above shows typical polyurethane formulation A used to evaluate the performance of different catalysts. All components were charged into a speed-mixer cup and centrifugally mixed for 1 minute at about 2500 rpm. For room temperature assessments to measure puddle time, a Brookfield viscometer was used to record the viscosity build-up over time. The point when the mixture reached 50,000 cP was chosen as the reaction onset time.

To determine cure at elevated temperature, the mixture was poured into a small aluminum dish and inserted into an oven heated at 100°C or 120°C, depending on the test. To determine string-gel time, a wooden tongue depressor was used to tap the urethane piece under heat; the time at which strings were pulled was recorded as string-gel time. The point when no material was left on the tongue depressor after making contact with the urethane part was recorded as tack-free time.

When checking cure at 120°C, the material sat in the oven for 10 minutes at temperature, and the finished material was gently pressed with a gloved finger for qualitative assessment. If the material was hard enough, a Shore A hardness measurement was taken using a durometer on flat areas of the puck.

Example 2

The reactivity at 65°C and at 100°C of various acid-blocked catalyst compositions and their comparison to Ni(acac) which is a standard catalyst widely used by the industry were measured and are shown in Table 2.

Table 2

| | Reactivity at 65°C | | Reactivity at 100°C | |
|---|---|---|---|---|
| | String-gel time (min) | Tack-free time (min) | String-gel time (min) | Tack-free time (min) |
| Ni(acac) | 50 | 75 | 4 | 5 |
| NHEP/BA100[1] | 58 | 65 | 16 | 18 |
| DBU/BA100 | 10 | 20 | 6 | 8 |
| DBU/pTSA[2] | >60 | >90 | 20 | 50 |
| DBU/MeSO$_3$H[3] | >60 | >90 | 20 | 50 |
| [1]BA100 is DABCO® BA100 available from Evonik Corp.<br>[2]pTSA is para-toluene sulfonic acid<br>[3]MeSO$_3$H is methylsulfonic acid | | | | |

Commonly used acid-blocked amine catalysts for polyurethane foam, such as acid-blocked diazabicycloundecene (DBU), were found to be inadequate because they tended to react too quickly when the reactive site was made available. Acid-blocked tertiary amine catalysts such as acid-blocked NHEP were found to deblock more readily.

The type of acid dictates the strength of interaction with the amine. Strong interaction, as with sulfonic acids (for example, para-toluene sulfonic acid or methylsulfonic acid) have such strong interaction with amines that they do not deblock readily. This is fine at the lower temperatures where the catalyst should be inactive, but under cure temperatures (>100°C), the catalyst should be active. The sulfonic acids do not deblock at this temperature range, making the catalyst inactive. Carboxylic acids (for example, C8 acids, polymeric acids, and aromatic carboxylic acids) do deblock at this temperature range, making the catalyst active.

Example 3

The reactivity of various acid-blocked catalyst compositions in combination with an acid-blocked version of a more active amine and their comparison to Ni(acac) which is a standard catalyst widely used by the industry were measured are shown in Table 3.

Table 3

|  | 25°C reaction onset time (min) | 100°C string gel time (min) | 100°C tack-free time (min) |
|---|---|---|---|
| Ni(acac) | >60 | 3 | 5 |
| NHEP/BA100[1] | >60 | 16 | 18 |
| TMIPA/BA100[1] | >40 | 12 | 15 |
| TMIPA/OA[2] | 8 | 2 | 4 |
| NHEP/DMCHA/2-EHA (60/40 ratio)[3] | 22 | 3 | 5 |
| NHEP/DMI/OA (50/50 ratio)[2] | 25 | 3 | 5 |
| [1]BA100 is DABCO® BA100 available from Evonik Corp. [2]OA is octanoic acid [3]2-EHA is 2-ethylhexanoic acid | | | |

While reaction offset at room temperature took place a little sooner (about 20 minutes compared to Ni(acac) activity onset of 60 minutes), it was still long enough to run through hand-frothing experiments, which typically involve frothing the mixture for 3-5 minutes under a high-shear mixer, then spreading out onto substrate.

Improved cure was determined when blending the NHEP salt with a salt of dimethylimidazole (DMI) or dimethylcyclohexamine (DMCHA) in equal proportions, and string-gel and tack-free times matched the Ni(acac).

Example 4

Table 4 shows the performance of various acid-blocked catalyst compositions with or without different trimer catalysts and their comparison to Ni(acac) which is a standard catalyst widely used by the industry.

Table 4

| Loading % by wt | Catalyst composition | 25°C reaction onset time (min) | 100°C tack-free time (min) | Shore A hardness after 10 min/120°C |
|---|---|---|---|---|
| 1% | Ni(acac) | >60 | 5 | 50 |
| 1% | NHEP/TOFA[1] | 60 | 10 | Too soft / sticky to test |
| 0.1% | Ammonium pivalate | 17 | 2 | 65 |
| 1% | Ammonium pivalate / NHEP/ TOFA (10/90 ratio) [1] | 60 | 3.5 | 75 |
| 0.1% | Potassium acetate | 21 | 2 | 70 |
| 1% | Potassium acetate/NHEP/ TOFA (10/90) [1] | 60 | 3 | 72 |
| 1% | Ammonium pivalate / TDMAMP/TOFA (10/90) [1] | 60 | 3 | 60 |
| 1% | Ammonium pivalate / PC9/TOFA (10/90) [2] | 18 | 5 | -- |

(continued)

| Loading % by wt | Catalyst composition | 25°C reaction onset time (min) | 100°C tack-free time (min) | Shore A hardness after 10 min/120°C |
|---|---|---|---|---|
| 0.1% | Sodium glycinate | 60 | 5 | 65 |
| [1]TOFA is tall oil fatty acid [2]PC9 is bis(3-dimethylaminopropyl)-n,n-dimethylpropanediamine | | | | |

Table 4 shows that the acid-blocked ammonium pivalate complex and acid-blocked potassium acetate complex provided adequate latency with good cure at higher temperatures. However, the trimer catalysts alone tended to shorten puddle life and were generally active at room temperature after about 15-20 minutes.

Blending the trimer catalyst with the acid-blocked latent amine allowed better control over the puddle life while also maintaining cure at >100°C. This only worked with a sufficiently latent amine, such as NHEP and tris(dimethylaminomethyl)phenol (TDMAMP). When a more efficient catalyst was tested to try this (i.e. PC9), it did not work as activity at room temperature became an issue.

Example 5

Manual foaming operations were carried out using a dissolver, *Dispermat*® *LC75* model from *VMA-Getzman,* equipped with a dissolver disc, Ø = 6 cm. For this purpose, firstly polyols, stabilizer, catalyst and optionally calcium carbonate in the appropriate ratio were weighed into a 1000 ml plastic beaker and stirred at ca. 500 rpm for 3 minutes to give a homogeneous mixture. Isocyanate was then added and the mixture was foamed for 10 minutes at 2200 rpm. Care was taken here that the dissolver disc was always immersed sufficiently into the mixture that a proper vortex was formed. The density of the reaction mixture foamed in this way was used as an evaluation criterion for the effectiveness of the foam stabilizer. The foamed reaction mixture was then painted onto a coated release paper, using a film drawing apparatus of the *AB3220* type from TQC, equipped with a 2 mm round doctor blade, and cured for 10 minutes at 120°C.

Example 6

Machine foaming operations were conducted using a fully automatic laboratory foam generator, *Pico-Mix XL* type from *Hansa-Mixer,* equipped with 2 separate eccentric spiral hopper pumps. For this purpose, firstly a premixture (batch size ca. 5 kg) of polyols, stabilizer, catalyst and optionally calcium carbonate was prepared and then filled into one of the two hopper pumps of the foam generator. The other hopper pump was filled with the isocyanate component. For the foaming experiments, polyol premixture and isocyanate were simultaneously injected into the mixing head of the foam generator and foamed therein by simultaneous introduction of air. The mixing head was operated here at 850 rpm in all experiments. The flow rates of both hopper pumps were continuously adjusted so that polyol and isocyanate were injected into the mixing head in the appropriate ratio (corresponding to the NCO index of the respective formulation), the total mass flow being about 5 - 8 kg/h (depending on the selected formulation, on the filler content etc.). The air flow into the mixing head was selected so that foam densities of 200 and 400 g/l were obtained after foaming. The foamed reaction mixture was then painted (layer thickness ca. 6 mm) onto a coated release paper using a laboratory coating table/dryer, *Labcoater LTE-S* from *Mathis AG,* and cured at 120°C for 10 minutes.

Table 5 shows the performance of various acid-blocked catalyst compositions with or without different trimer catalysts and their comparison to Ni(acac) which is a standard catalyst widely used by the industry.

Table 5

| Loading % by wt | Catalyst composition | Processing/puddle time at RT | Cure after 10 min in 120°C |
|---|---|---|---|
| 1% | Ni(acac) | ++ | ++ |
| 1% | NHEP/TOFA[1] | ++ | o |
| 1% | NHEP/DMCHA/2-EHA (60/40 ratio)[2] | ++ | o |
| 0.1% | Ammonium pivalate | ++ | + |
| 1% | Ammonium pivalate / NHEP/TOFA (10/90 ratio) [1] | ++ | ++ |

(continued)

| Loading % by wt | Catalyst composition | Processing/puddle time at RT | Cure after 10 min in 120°C |
|---|---|---|---|
| 1% | Potassium acetate/NHEP/TOFA (10/90) [1] | ++ | + |
| 1% | Ammonium pivalate / TDMAMP/TOFA (10/90) [1] | ++ | ++ |
| 0.1% | Sodium glycinate | ++ | + |
| [1]TOFA is tall oil fatty acid [2]2-EHA is 2-ethylhexanoic acid | | | |

**Claims**

1. A process comprising the steps of a) preparing a catalyst composition comprising at least one tertiary amine salt, wherein the at least one tertiary amine salt is a contact product of at least one carboxylic acid and at least one tertiary amine, wherein the at least one tertiary amine is selected from the group consisting of N-hydroxyethylpiperidine and tris(dimethylaminomethyl)phenol; and b) reacting at least one isocyanate, at least one polyol and the catalyst composition to form a polyurethane product.

2. The process of claim 1 further comprising c) forming a layer of the polyurethane product on a substrate; and d) heating the polyurethane product to a temperature from 100 to 180°C to cure the polyurethane product and form a polyurethane layer bonded to the substrate.

3. The process of claim 1 or 2 wherein the at least one carboxylic acid is selected from the group consisting of 2-ethylhexanoic acid, octanoic acid, neodecanoic acid, and tall oil fatty acid.

4. The process of claim 1 or 2 wherein the at least one carboxylic acid is an aromatic carboxylic acid.

5. The process of any of claims 1-4 wherein the catalyst composition further comprises a dimethylimidazole salt of carboxylic acid or a dimethylcyclohexamine salt of carboxylic acid.

6. The process of any of claims 1-5 wherein the catalyst composition further comprises at least one trimer catalyst.

7. The process of claim 6 wherein the at least one trimer catalyst is selected from the group consisting of ammonium pivalate and potassium acetate.

8. The process of any of claims 1-7 wherein step b) further includes reacting the at least one isocyanate, at least one polyol and the catalyst composition in the presence of a blowing agent.

9. The process of claim 8 wherein the blowing agent comprises air.

10. The process of any of claims 1-7 wherein the polyurethane product is a polyurethane elastomer.

11. The process of any of claims 1-9 wherein the polyurethane product is a mechanically frothed polyurethane foam.

Europäisches
Patentamt

European
Patent Office

Office européen
des brevets

# EUROPEAN SEARCH REPORT

Application Number

EP 22 16 0959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 169 921 A (DELEON ALBERTO [US] ET AL) 2 October 1979 (1979-10-02) | 1,3,6-9, 11 | INV. C08G18/09 |
| Y | * column 6, lines 15-49 – column 8, lines 58-64; example 1 * | 2-5,10 | C08G18/18 C08G18/20 C08G18/28 |
| Y | US 4 225 453 A (DEPAUL HARRY V ET AL) 30 September 1980 (1980-09-30) * col. 2, lines, 42-50; col. 5-6, tables 4-5 * | 3,5 | C08G18/32 C08G18/48 C08G18/63 C08G18/66 C08G18/76 |
| Y | US 2013/131276 A1 (BURDENIUC JUAN JESUS [US] ET AL) 23 May 2013 (2013-05-23) * page 8, paragraph 80 – page 12; figures 2-4; table 8 * | 2,4,10 | C08J9/12 C08L75/04 |

TECHNICAL FIELDS
SEARCHED      (IPC)

C08G
C08J
C08L

The present search report has been drawn up for all claims

| Place of search | Date of completion of the search | Examiner |
|---|---|---|
| Munich | 20 July 2022 | Stefaniu, Cristina |

## ANNEX TO THE EUROPEAN SEARCH REPORT
## ON EUROPEAN PATENT APPLICATION NO.

EP 22 16 0959

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2022

| Patent document cited in search report | | Publication date | Patent family member(s) | | Publication date |
|---|---|---|---|---|---|
| US 4169921 | A | 02-10-1979 | NONE | | |
| US 4225453 | A | 30-09-1980 | CA | 1120178 A | 16-03-1982 |
| | | | EP | 0006736 A1 | 09-01-1980 |
| | | | JP | S559678 A | 23-01-1980 |
| | | | JP | S6150966 B2 | 06-11-1986 |
| | | | US | 4225453 A | 30-09-1980 |
| US 2013131276 | A1 | 23-05-2013 | CA | 2854020 A1 | 23-05-2013 |
| | | | CN | 103946260 A | 23-07-2014 |
| | | | EP | 2780385 A1 | 24-09-2014 |
| | | | JP | 6130390 B2 | 17-05-2017 |
| | | | JP | 6141946 B2 | 07-06-2017 |
| | | | JP | 2014533758 A | 15-12-2014 |
| | | | JP | 2016041824 A | 31-03-2016 |
| | | | US | 2013131276 A1 | 23-05-2013 |
| | | | US | 2018065913 A1 | 08-03-2018 |
| | | | WO | 2013074907 A1 | 23-05-2013 |
| | | | ZA | 201403111 B | 25-11-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6140381 A
- US 8062709 B

- US 20170225158 A1